# EUROPÄISCHE PATENTSCHRIFT

(11) **EP 3 746 675 B1**
(45) Veröffentlichungstag und Bekanntmachung des Hinweises auf die Patenterteilung: **16.03.2022**
(21) Anmeldenummer: 19702574.5
(22) Anmeldetag: 30.01.2019
(51) Int. Cl.: F16F 9/32

(54) **SCHWINGUNGSDÄMPFER UMFASSEND EINEN LECKAGEINDIKATOR, UND VERFAHREN ZUR INDIKATION EINER LECKAGE EINES SCHWINGUNGSDÄMPFERS**
VIBRATION DAMPER COMPRISING A LEAKAGE INDICATOR AND METHOD FOR INDICATING A LEAK IN A VIBRATION DAMPER
AMORTISSEUR DE VIBRATIONS COMPRENANT UN INDICATEUR DE FUITE, ET PROCÉDÉ D'INDIQUATION DE FUITE D'UN AMORTISSEUR DE VIBRATIONS

(30) Priorität: 01.02.2018 DE 102018201530
(43) Veröffentlichungstag der Anmeldung: 09.12.2020
(73) Patentinhaber: ThyssenKrupp Bilstein GmbH, 58256 Ennepetal (DE); thyssenkrupp AG, 45143 Essen (DE)
(72) Erfinder: NORUSCHAT, Tim, 42369 Wuppertal (DE); BAJRAMOVIC, Haris, 58452 Witten (DE)
(74) Vertreter: thyssenkrupp Intellectual Property GmbH
(86) Internationale Anmeldenummer: PCT/EP2019/052177
(87) Internationale Veröffentlichungsnummer: WO 2019/149721

(56) Entgegenhaltungen:
- DE-A1- 3 434 011
- DE-A1-102010 035 576
- DE-U1-202008 007 669
- US-B1- 9 662 951

## Beschreibung

Die vorliegende Erfindung betrifft einen Schwingungsdämpfer umfassend einen Leckageindikator, ein Verfahren zur Indikation einer Leckage eines Schwingungsdämpfers.

### Stand der Technik

Schwingungsdämpfer und Leckageindikatoren dieser Bauart sind im Stand der Technik in den erfindungsgemäßen Ausführungen bisher nicht bekannt.

Problematisch bei den im Stand der Technik bekannten Schwingungsdämpfern ist, dass eine Leckage eines Schwingungsdämpfers und insbesondere dessen Leckagegrad nicht objektiv beurteilt werden kann und zumeist auch keine Beurteilung von außen einfach durchgeführt werden kann, sondern der Schwingungsdämpfer meist zerstörend geöffnet werden muss, was zudem zeitintensiv, sehr aufwendig und fachmännisch durchzuführen ist.

DE 10 2010 035576 A1 offenbart einen lecksicheren Dämpfer, der eine Selbstdiagnose einer Ölleck-Situation liefert, welche eine Notwendigkeit einer Wartung des Dämpfers angibt. Der vorliegenden Erfindung liegt daher die Aufgabe zugrunde, einen verbesserten Schwingungsdämpfer bereitzustellen, bei welchem die zuvor genannten Nachteile vermieden werden. Insbesondere soll mit diesem verbesserten Schwingungsdämpfer sowie einem verbesserten Verfahren zur Indikation einer Leckage eines Schwingungsdämpfers eine Beurteilungsmöglichkeit für eine Leckage des Schwingungsdämpfers, bereitgestellt werden, welche, objektiv, zuverlässig, einfach, technisch unkompliziert, auch von Laien durchführbar und insbesondere ohne einen Schwingungsdämpfer zu zerstören, durchführbar ist.

### Offenbarung der Erfindung

Diese Aufgabe wird mit einem Schwingungsdämpfer nach Anspruch 1, sowie einem Verfahren zur Indikation einer Leckage eines Schwingungsdämpfers nach Anspruch 4.

Der Gegenstand der Erfindung ist ein Schwingungsdämpfer für Fahrzeuge umfassend ein mindestens teilweise mit Dämpfermedium gefülltes Dämpferrohr mit einer Längsachse, in dem eine Kolbenstange hin und her bewegbar ist, wobei mit der Kolbenstange ein Arbeitskolben mitbewegbar ist, durch den der Innenraum des Dämpferrohres in einen kolbenstangeseitigen Arbeitsraum und einen kolbenstangenfernen Arbeitsraum aufgeteilt ist, wobei das Dämpferrohr eine Außenwandung aufweist, wobei der Schwingungsdämpfer mindestens einen Leckageindikator für das Dämpfermedium aufweist, wobei der mindestens eine Leckageindikator mindestens eine Indikatorreaktionszusammensetzung zur Reaktion mit dem Dämpfermedium, bei Kontakt mit desselbigen, umfasst, und wobei der mindestens eine Leckageindikator von mindestens einem Schutzelement wenigstens teilweise abgedeckt ist.

Ein weiterer Gegenstand ist ein Leckageindikator zur Anordnung an einem Schwingungsdämpfer nach einem der vorherigen Ansprüche 1 bis 3.

Ein weiterer Gegenstand der Erfindung ist ein Verfahren zur Indikation einer Leckage eines Schwingungsdämpfers nach einem der Ansprüche 1 bis 3 umfassend die Schritte:
a) Bereitstellen des Schwingungsdämpfers, umfassend mindestens einen Leckageindikator,
b) Leckage des in Schritt a) bereitgestellten Schwingungsdämpfers unter wenigstens teilweisen Austreten des Dämpfermediums des in Schritt a) bereitgestellten Schwingungsdämpfers,
c) Kontaktieren des in Schritt b) wenigstens teilweise ausgetretenen Dämpfermediums mit dem mindestens einen Leckageindikator des in Schritt a) bereitgestellten Schwingungsdämpfers,
d) Indikation der in Schritt c) erfolgten Kontaktierung des wenigstens teilweise ausgetretenen Dämpfermediums mit dem mindestens einen Leckageindikator des in Schritt b) leckenden Schwingungsdämpfers.

Ein weiterer Gegenstand ist ein Farbumschlagindikator zur Verwendung als Leckageindikator bei einem Schwingungsdämpfer für Fahrzeuge nach einem der Ansprüche 1 bis 5.

Die vorliegende Erfindung kann in einem Schwingungsdämpfer sowie in einem Verfahren zur Indikation einer Leckage eines Schwingungsdämpfers verwirklicht sein.

Der erfindungsgemäße Schwingungsdämpfer weist gegenüber konventionellen Schwingungsdämpfern den Vorteil auf, dass im Falle einer Leckage des Schwingungsdämpfers diese angezeigt und insbesondere das Leckageausmaß objektiv beurteilt werden kann. Des Weiteren kann die Beurteilung einfach und von außen durchgeführt werden, ohne dass der Schwingungsdämpfer zerstörend geöffnet werden muss. Zudem kann die Beurteilung schnell und ohne intensive technische Vorbildung erfolgen. Das erfindungsgemäße Verfahren zur Indikation einer Leckage eines Schwingungsdämpfers weist gegenüber konventionellen Verfahren den Vorteil auf, dass im Falle einer Leckage des Schwingungsdämpfers diese angezeigt und insbesondere das Leckageausmaß objektiv beurteilt werden kann. Des Weiteren kann die Beurteilung einfach und von außen durchgeführt werden, ohne dass der Schwingungsdämpfer zerstörend geöffnet werden muss. Zudem kann die Beurteilung schnell und ohne intensive technische Vorbildung erfolgen.

### Detaillierte Beschreibung der Erfindung

Im Rahmen der vorliegenden Erfindung wird unter einem Dämpfermedium ein Medium verstanden, welches ausgewählt ist aus einer Gruppe von einem Dämpfungsfluid, einem Dämpfungsgas, einem Schmiermittel, einem Kühlmittel, einem Ferrofluid, einer Farbumschlagzusammensetzung oder einer Kombination hiervon.

Insbesondere ist ein Dämpfermedium ausgewählt aus einer Gruppe von einer Dispersion, einem Feststoffgemisch, einer Suspension, einem Aerosol, einem Einschluss, einer Emulsion, einem Schaum oder einer Kombination hiervon. Beispielsweise kann das Dämpfermedium aus einer Gruppe von einer Ölzusammensetzung, insbesondere TITAN SAF 1579 EU 175 BLUE, TITAN SAF 4257 EU 50, TITAN SAF 5045 EU 137 RED, VITAMOL ZH-M, CASTROL HYSPIN ZH-M, PENTOSIN oder einer Kombination hiervon, einer Kühlmittelzusammensetzung, insbesondere einer Glysantinzusammensetzung, wie beispielsweise BASF G11, BASF G12 oder einer Kombination hiervon, einer Fettzusammensetzung, einer Gaszusammensetzung, insbesondere Stickstoff, Sauerstoff oder einer Kombination hiervon, einer Partikelzusammensetzung oder einer Kombination hiervon.

Gemäß der Erfindung umfasst der mindestens eine Leckageindikators mindestens eine Indikatorreaktionszusammensetzung zur Reaktion mit dem Dämpfermedium bei Kontakt mit desselbigen.

Unter eine Indikatorreaktionszusammensetzung wird im Rahmen der vorliegenden Erfindung die Zusammensetzung eines Indikators verstanden, welche bei Kontakt mit dem Dämpfermedium reagiert und eine Indikation erfolgt. Eine Indikation kann beispielsweise ein Farbumschlag sein. Ein Kontakt des Dämpfermediums mit dem mindestens einen Leckageindikator erfolgt beispielsweise bei der Leckage eines Schwingungsdämpfers, wenn insbesondere Dämpfermedium über das Verschlusspaket des Schwingungsdämpfers austritt und sich an der Außenwandung des Schwingungsdämpfers bis zu dem Leckageindikator bewegt.

Nach einer weiteren Ausführungsform der Erfindung ist der mindestens eine Leckageindikator wenigstens teilweise radial umlaufend an dem Dämpferrohr, insbesondere an der Außenwandung des Dämpferrohrs angeordnet.

In einer weiteren Ausführungsform der Erfindung ist der mindestens eine Leckageindikator an dem Dämpferrohr in einem Bereich angeordnet, in welchem die Außenwandung des Dämpferrohres nicht überdeckt, insbesondere von außen sichtbar ist.

Gemäß einer weiteren Ausführungsform der Erfindung weist der mindestens eine Leckageindikator mindestens ein Verteilelement zur wenigstens teilweisen Verteilung von dem Dämpfermedium wenigstens teilweise in Umfangsrichtung des Dämpferrohrs bei Kontakt des Dämpfermediums mit dem mindestens einen Leckageindikator, auf. Ein Kontakt des Dämpfermediums mit dem mindestens einen Leckageindikator erfolgt beispielsweise bei der Leckage eines Schwingungsdämpfers, wenn insbesondere Dämpfermedium über das Verschlusspaket des Schwingungsdämpfers austritt und sich an der Außenwandung des Schwingungsdämpfers bis zu dem Leckageindikator bewegt.

Im Rahmen der vorliegenden Erfindung wird unter einem Verteilelement ein Element verstanden, welches Dämpfermedium wenigstens in Umfangsrichtung des Dämpferrohrs verteilen kann. Beispielsweise ist ein Verteilelement ausgewählt aus einer Gruppe von einer Manschette, einer Rinne, eines Ringes, insbesondere eines Kranzes, einer Krone, einer Ablaufkante, einer Ausnehmung, einer Erhebung, insbesondere einer Ausprägung, eines Wulstes oder einer Kombination hiervon.

In der Erfindung ist der mindestens eine Leckageindikator von mindestens einem Schutzelement wenigstens teilweise abgedeckt.

Unter einem Schutzelement wird im Rahmen der vorliegenden Erfindung ein Element verstanden, welches den Leckageindikator vor äußeren Einflüssen, wie beispielsweise mechanischen Krafteinwirkungen, Verschmutzungen, insbesondere Staub, Straßenverunreinigungen, Wetterbeeinflussung, weiteren Emissionen, insbesondere Fluiden, Fetten, Partikeln, Emulsionen oder einer Kombination hiervon, schützt. Beispielsweise ist ein Schutzelement ausgewählt aus einer Gruppe von einer Folie, insbesondere einer Klebefolie, einem Schlauch, insbesondere einem Schrumpfschlauch, einer Beschichtung, einer Lackierung, einer Versiegelung, einem Rohrabschnitt, insbesondere einem geschlitzten Rohrabschnitt, einer Abdeckung, insbesondere einer Blechabdeckung oder einer Kombination hiervon.

Nach einer weiteren Ausführungsform der Erfindung umfasst die mindestens eine Indikatorreaktionszusammensetzung des mindestens einen Leckageindikators mindestens eine Farbumschlagzusammensetzung, wobei die Farbumschlagzusammensetzung eine erste Farbe aufweist und bei Kontakt mit dem Dämpfermedium in eine zweite Farbe umschlägt.

Gemäß einer weiteren Ausführungsform des erfindungsgemäßen Verfahrens weist der in Schritt a) bereitgestellte Schwingungsdämpfer zusätzlich mindestens ein Verteilelement auf, wobei das in Schritt b) wenigstens teilweise ausgetretene Dämpfermedium mit dem zusätzlichen mindestens einem Verteilelement wenigstens teilweise in Umfangsrichtung des Dämpferrohrs verteilt wird.

In einer weiteren Ausführungsform des erfindungsgemäßen Verfahrens erfolgt die Indikation in Schritt d) wenigstens als eine Farbumschlagreaktion.

### Kurze Beschreibung der Zeichnungen

Das erfindungsgemäße Schwingungsdämpfer und der erfindungsgemäße Leckageindikator werden anhand der Zeichnung erläutert.
- Fig. 1: zeigt eine Aufsicht eines Schwingungsdämpfers gemäß einer Ausführungsform der Erfindung,
- Fig. 2: zeigt eine Ausführungsform der Erfindung nach Fig. 1 mit einem Verteilelement,
- Fig. 3: zeigt eine Ausführungsform der Erfindung nach Fig. 2 mit einem zusätzlichen Schutzelement.

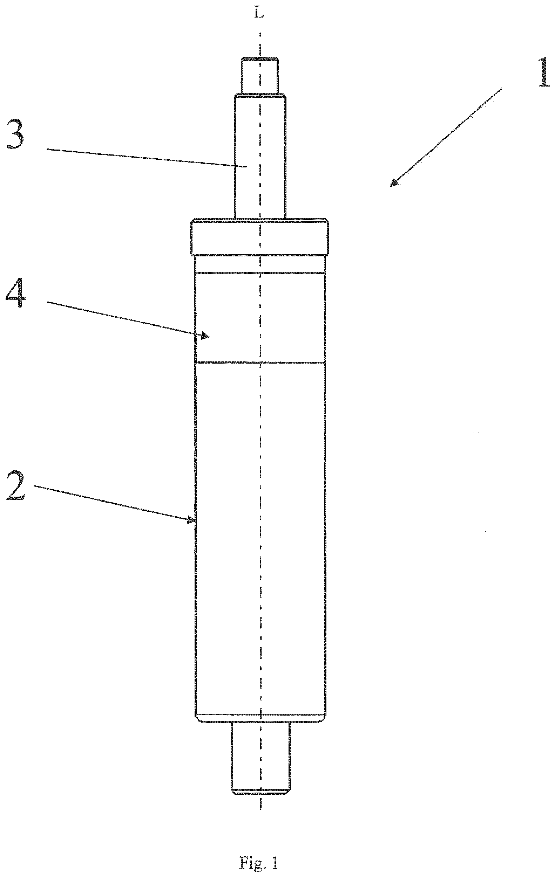

In der Fig. 1 ist eine Aufsicht eines Schwingungsdämpfers 1 mit einem Dämpferrohr 2, einer Kolbenstange 3 und einem Leckageindikator 4 gemäß einer Ausführungsform der Erfindung dargestellt. Der Schwingungsdämpfers 1 weist eine mit einer gestrichelten Linie dargestellte Längsachse L auf. Der Leckageindikator 4 ist umlaufend in Umfangsrichtung des Dämpferrohrs an dem Dämpferrohr 1 angeordnet.

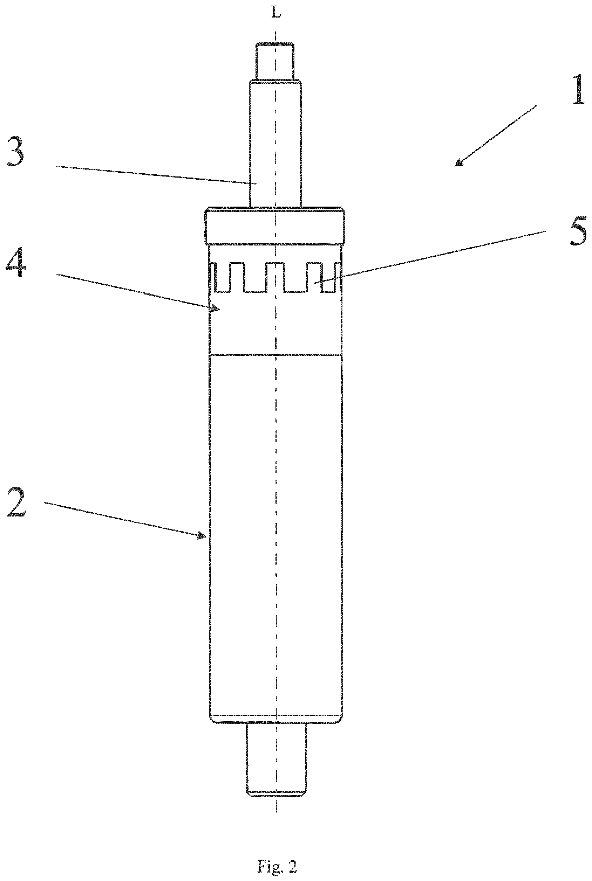

In der Fig. 2 ist eine Ausführungsform der Erfindung nach Fig. 1 mit einem mit einem Verteilelement 5 dargestellt. Das Verteilelement 5 randseitig an dem Leckageindikator 4 umlaufend in Umfangsrichtung des Dämpferrohrs auf der, der Kolbenstange 3 zugewandten Seite angeordnet.

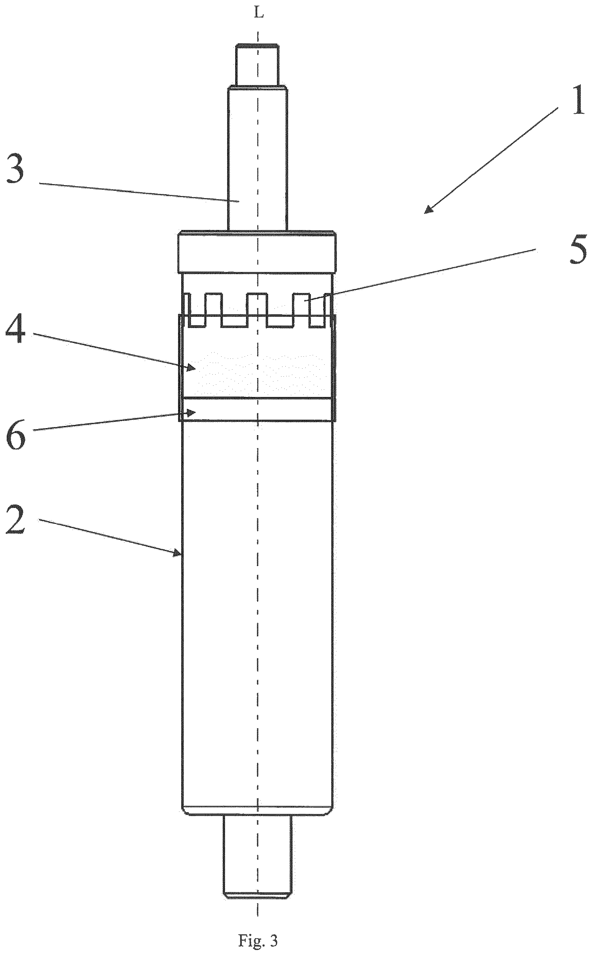

In der Fig. 3 ist eine Ausführungsform der Erfindung nach Fig. 2 mit einem zusätzlichen Schutzelement 6 dargestellt. Das Schutzelement 6 ist derart angeordnet, dass es den Leckageindikator 4 wenigstens teilweise überdeckt.

### Gewerbliche Anwendbarkeit

Schwingungsdämpfer, Leckageindikatoren der vorbeschriebenen Art werden in der Produktion von Fahrzeugen, insbesondere von Fahrwerken von Kraftfahrzeuge eingesetzt.

### Bezugszeichenliste

- 1: = Schwingungsdämpfer
- 2: = Dämpferrohr
- 3: = Kolbenstange
- 4: = Leckageindikator
- 5: = Verteilelement
- 6: = Schutzelement

- L: = Längsachse

## Patentansprüche

1. Schwingungsdämpfer (1) für Fahrzeuge umfassend
ein mindestens teilweise mit Dämpfermedium gefülltes Dämpferrohr (2) mit einer Längsachse (L), in dem eine Kolbenstange (3) hin und her bewegbar ist, wobei mit der Kolbenstange (3) ein Arbeitskolben mitbewegbar ist, durch den der Innenraum des Dämpferrohres (2) in einen kolbenstangeseitigen Arbeitsraum und einen kolbenstangenfernen Arbeitsraum aufgeteilt ist, wobei das Dämpferrohr (2) eine Außenwandung aufweist,
wobei der Schwingungsdämpfer (1) mindestens einen Leckageindikator (4) für das Dämpfermedium aufweist, wobei der mindestens eine Leckageindikator (4) von mindestens einem Schutzelement (6) wenigstens teilweise abgedeckt ist,
**dadurch gekennzeichnet, dass**
der mindestens eine Leckageindikator (4) mindestens eine Indikatorreaktionszusammensetzung zur Reaktion mit dem Dämpfermedium, bei Kontakt mit desselbigen, umfasst.

2. Schwingungsdämpfer (1) nach dem vorherigen Anspruch 1, **dadurch gekennzeichnet, dass** der mindestens eine Leckageindikator (4) wenigstens teilweise radial umlaufend an dem Dämpferrohr (2), insbesondere an der Außenwandung des Dämpferrohrs (2) angeordnet ist.

3. Schwingungsdämpfer (1) nach einem der vorherigen Ansprüche 1 bis 2, **dadurch gekennzeichnet, dass** der mindestens eine Leckageindikator (4) mindestens ein Verteilelement (5) zur wenigstens teilweisen Verteilung von dem Dämpfermedium wenigstens teilweise in Umfangsrichtung des Dämpferrohrs (2) bei Kontakt des Dämpfermediums mit dem mindestens einen Leckageindikator (4), aufweist.

4. Verfahren zur Indikation einer Leckage eines Schwingungsdämpfers (1) nach einem der vorherigen Ansprüche 1 bis 3 umfassend die Schritte:
a) Bereitstellen des Schwingungsdämpfers (1) nach einem der vorherigen Ansprüche 1 bis 3, umfassend mindestens einen Leckageindikator (4),
b) Leckage des in Schritt a) bereitgestellten Schwingungsdämpfers unter wenigstens teilweisen Austreten des Dämpfermediums des in Schritt a) bereitgestellten Schwingungsdämpfers (1),
c) Kontaktieren des in Schritt b) wenigstens teilweise ausgetretenen Dämpfermediums mit dem mindestens einen Leckageindikator (4) des in Schritt a) bereitgestellten Schwingungsdämpfers (1),
d) Indikation der in Schritt c) erfolgten Kontaktierung des wenigstens teilweise ausgetretenen Dämpfermediums mit dem mindestens einen Leckageindikator (4) des in Schritt b) leckenden Schwingungsdämpfers (1).

5. Verfahren zur Indikation der Leckage eines Schwingungsdämpfers (1) nach dem vorherigen Anspruch 4, **dadurch gekennzeichnet, dass** der in Schritt a) bereitgestellte Schwingungsdämpfer zusätzlich mindestens ein Verteilelement (5) aufweist, wobei das in Schritt b) wenigstens teilweise ausgetretene Dämpfermedium mit dem zusätzlichen mindestens einem Verteilelement (5) wenigstens teilweise in Umfangsrichtung des Dämpferrohrs (2) verteilt wird.

6. Verfahren zur Indikation der Leckage eines Schwingungsdämpfers (1) nach einem der vorherigen Ansprüche 4 bis 5, **dadurch gekennzeichnet, dass** die Indikation in Schritt d) wenigstens als eine Farbumschlagreaktion erfolgt.

## Claims

1. A vibration damper (1) for vehicles, comprising
a damper tube (2) which is at least partially filled with damper medium and which has a longitudinal axis (L) along which a piston rod (3) is movable back and forth, wherein a working piston is movable jointly with the piston rod (3), by means of which working piston the interior space of the damper tube (2) is divided into a piston-rod-side working space and a piston-rod-remote working space, wherein the damper tube (2) has an outer wall, wherein
the vibration damper (1) has at least one leakage indicator (4) for the damper medium, wherein the at least one leakage indicator (4) is at least partially covered by at least one protective element (6)
**characterized in that**
the at least one leakage indicator (4) comprises at least one indicator reaction composition for reaction with the damper medium upon contact therewith.

2. The vibration damper (1) as claimed in the preceding claim 1, **characterized in that** the at least one leakage indicator (4) is arranged in an at least partially radially encircling manner on the damper tube (2), in particular on the outer wall of the damper tube (2).

3. The vibration damper (1) as claimed in one of the preceding claims 1 to 2, **characterized in that** the at least one leakage indicator (4) has at least one distributing element (5) for at least partially distributing the damper medium at least partially in a circumferential direction of the damper tube (2) upon contact of the damper medium with the at least one leakage indicator (4).

4. A method for indicating a leakage of a vibration damper (1) as claimed in any of the preceding claims 1 to 3, comprising the steps:
a) providing the vibration damper (1) as claimed in any of the preceding claims 1 to 5, comprising at least one leakage indicator (4),
b) leakage of the vibration damper provided in step a), with an at least partial escape of the damper medium of the vibration damper (1) provided in step a),
c) contact of the damper medium, which has at least partially escaped in step b), with the at least one leakage indicator (4) of the vibration damper (1) provided in step a),
d) indication of the contact, which has occurred in step c), of the damper medium, which has at least partially escaped, with the at least one leakage indicator (4) of the vibration damper (1) which has leaked in step b).

5. The method for indicating the leakage of a vibration damper (1) as claimed in the preceding claim 4, **characterized in that** the vibration damper provided in step a) additionally has at least one distributing element (5), wherein the damper medium, which has at least partially escaped in step b), is at least partially distributed in a circumferential direction of the damper tube (2) by means of the additional at least one distributing element (5).

6. The method for indicating the leakage of a vibration damper as claimed in either of the preceding claims 4 and 5, **characterized in that** the indication in step d) occurs at least as a color change reaction.

## Revendications

1. Amortisseur de vibrations (1) destiné à des véhicules, ledit amortisseur de vibrations comprenant un tube d'amortisseur (2) qui est rempli au moins partiellement d'un milieu amortisseur, qui présente un axe longitudinal (L) et dans lequel une tige de piston (3) est mobile suivant un mouvement alternatif, un piston de travail étant mobile conjointement avec la tige de piston (3) et permettant de diviser l'espace intérieur du tube d'amortisseur (2) en une chambre de travail côté tige de piston et une chambre de travail éloignée de la tige de piston, le tube d'amortisseur (2) comportant une paroi extérieure, l'amortisseur de vibrations (1) comportant au moins un indicateur de fuite (4) destiné au milieu amortisseur, l'au moins un indicateur de fuite (4) étant au moins partiellement recouvert par au moins un élément de protection (6), **caractérisé en ce que**
l'au moins un indicateur de fuite (4) comprend au moins une composition de réaction d'indicateur destinée à réagir avec le milieu amortisseur au contact de celui-ci.

2. Amortisseur de vibrations (1) selon la revendication 1 précédente, **caractérisé en ce que** l'au moins un indicateur de fuite (4) est disposé au moins en partie radialement sur le pourtour du tube d'amortisseur (2), notamment sur la paroi extérieure du tube d'amortisseur (2).

3. Amortisseur de vibrations (1) selon l'une des revendications précédentes 1 à 2, **caractérisé en ce que** l'au moins un indicateur de fuite (4) comporte au moins un élément de distribution (5) destiné à distribuer au moins partiellement le milieu amortisseur au moins partiellement dans la direction circonférentielle du tube d'amortisseur (2) lors du contact du milieu amortisseur avec l'au moins un indicateur de fuite (4).

4. Procédé d'indication d'une fuite d'un amortisseur de vibrations (1) selon l'une des revendications précédentes 1 à 3, ledit procédé comprenant les étapes suivantes :
a) l'amortisseur de vibrations (1) selon l'une des revendications précédentes 1 à 3 étant fourni qui comprend au moins un indicateur de fuite (4),
b) l'amortisseur de vibrations fourni à l'étape a) fuyant avec échappement au moins partiel du milieu amortisseur de l'amortisseur de vibrations (1) fourni à l'étape a),
c) le milieu amortisseur qui s'est au moins partiellement échappé à l'étape b) étant mis en contact avec l'au moins un indicateur de fuite (4) de l'amortisseur de vibrations (1) fourni à l'étape a),
d) une indication étant effectuée du contact, qui a eu lieu à l'étape c), du milieu amortisseur qui s'est au moins partiellement échappé avec l'au moins un indicateur de fuite (4) de l'amortisseur de vibrations (1) qui fuit à l'étape b).

5. Procédé d'indication de fuite d'un amortisseur de vibrations (1) selon la revendication 4 précédente, **caractérisé en ce que** l'amortisseur de vibrations fourni à l'étape a) comporte en outre au moins un élément de distribution (5), le milieu amortisseur qui s'est au moins partiellement échappé à l'étape b) étant distribué au moins partiellement dans la direction circonférentielle du tube d'amortisseur (2) avec l'au moins un élément de distribution supplémentaire (5).

6. Procédé d'indication de fuite d'un amortisseur de vibrations (1) selon l'une des revendications précédentes 4 à 5, **caractérisé en ce que** l'indication à l'étape d) est effectuée au moins sous la forme d'une réaction à changement de couleur.
